# EUROPEAN PATENT APPLICATION

(11) **EP 3 754 936 A1**
(43) Date of publication of application: **23.12.2020**
(21) Application number: 20180259.2
(22) Date of filing: 16.06.2020
(51) Int. Cl.: H04L 29/06, G06F 3/0482, G06F 3/0488

(54) **FACILITATED VIDEO COMMUNICATION SYSTEM AND METHOD, SPECIALIZED FOR USE BY ELDERLY PEOPLE OR PEOPLE WITH COGNITIVE OR MOTOR DISABILITIES**

(30) Priority: 17.06.2019 IT 201900009147
(71) Applicant: Valileo S.R.L.S., 20124 Milano (MI) (IT)
(72) Inventor: VACCARO, Michele Alessandro, 20900 MONZA (IT)
(74) Representative: Penza, Giancarlo

(57) **Abstract**

The present invention relates to a facilitated video communication system (1), specific for people with cognitive or motor disabilities, comprising a main electronic device (10) configured to provide wireless facilitated video communication services for people with cognitive or motor disabilities, a second electronic device (20) configured to make and receive wireless video calls with the main electronic device (10) by a registered user, a telecommunications network (30) configured to allow a wireless video call to be made between two or more registered users and a remote device (40). The invention also allows communication and training through components, called videolets, which can exploit the extreme ease of use of the main electronic device (10) to provide specific video guides for elderly people or people with cognitive or motor disabilities. The invention further describes a corresponding facilitated video communication method.

## Description

### FIELD OF APPLICATION

The present invention relates to a facilitated video communication system and method, specific for people with cognitive or motor disabilities, such as the elderly.

### PRIOR ART

Several simplified communication solutions are known for the elderly and/or those with little experience with the use of technology.

These simplified solutions are always based on more or less successful adaptations of generic systems that require users to have a good amount of confidence with computer technologies.

Considering the normal tablets or smartphones on the market, also with simplified applications, there is always a need to deal with the mechanisms for locking and unlocking the devices, with hundreds of features and "gesture control" necessary for correct operation, with energy saving and recognition options, without considering the general ergonomics of the interface and the many icons corresponding to the many functions offered. These functions are often not very useful and hardly comprehensible by people with cognitive or motor disabilities, such as the elderly, for whom they represent insurmountable barriers to the use of the currently known devices.

The technological barrier to effective and visual communication is in fact the complexity of using IT tools that are designed primarily for optimal use by normally gifted people, without cognitive deficiencies and in particular those belonging to age groups represented by younger people or more productive people.

The object of the present invention is therefore to provide a specialised facilitated video communication system designed entirely from its foundations, for the specific user profile described above.

Another object of the present invention is to provide the users thereof with a tool entirely designed to allow the immediate use thereof without the need for any computer or technological preparation or expertise, while at the same time offering a new, simple, visual and rich communication experience designed for them.

Another object of the present invention is to allow, in addition to video communications, to exploit the intuitiveness of the user interface, to activate functional modules capable of offering additional video-guided services that can be assimilated with video communication, called VIDEOLETs, specific for elderly or disabled users.

In addition to video calling services, and the ease of use of the system, VIDEOLETs represent a completely innovative system that allows the many operators offering services for the elderly or disabled to offer a wide range of services for their well-being.

A further object of the present invention is the use in all those situations where there is a desire to be able to access a quality communication without any technological complications and with the touch of a finger.

Another object of the present invention is to provide a facilitated video communication system, which prevents unknown or unwanted persons from contacting the person with cognitive or motor weaknesses.

A further object of the present invention is that of providing a facilitated video communication system, specific for people with cognitive or motor disabilities, which can guarantee a high level of safety.

Another object of the present invention is that of providing a facilitated video communication system and method, specific for people with cognitive or motor disabilities, which is efficient.

A further and not least object of the present invention is that of providing a facilitated video communication system and method, specific for people with cognitive or motor disabilities, which is highly reliable, easy to realise and simple to use.

### SUMMARY OF THE INVENTION

In a first aspect of the invention, the above-mentioned objects are achieved by a facilitated video communication system, specific for people with cognitive or motor disabilities, according to what is disclosed in claim 1. Advantageous aspects are disclosed in dependent claims 2 to 15.

In a second aspect of the invention, the above-mentioned objects are achieved by a facilitated video communication method, specific for people with cognitive or motor disabilities, according to what is disclosed in claim 16.

In a third aspect, the invention describes a computer program, which when running on a computer implements at least one or more steps of the method according to the second aspect of the invention, according to what is disclosed in claim 17.

The technical effects/advantages mentioned, and other technical effects/advantages of the invention, will emerge in further detail from the description provided herein below of an example of embodiment provided by way of approximate and non-limiting example with reference to the appended drawings.

### BRIEF DESCRIPTION OF THE DRAWINGS

For a better understanding of the invention and to appreciate the advantages thereof, several non-limiting example embodiments are described herein below, referring to the attached figures, in which:
- figure 1 illustrates an example of the system of the invention adapted to facilitate the video communication of people with cognitive or motor disabilities;
- figure 2 is a block diagram of the system of figure 1.
- figure 3 shows a non-limiting example of a main electronic device;

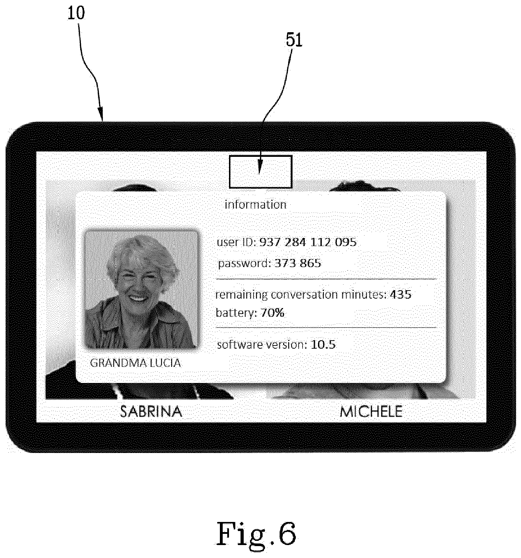

- figures 4, 5 and 6 illustrate several screens of the main electronic device;
- figure 7 illustrates the contacts configuration window.

### DETAILED DESCRIPTION

It should be observed that in the following description, identical or analogous blocks, components or modules are indicated in the figures with the same numerical references, even where they are illustrated in different embodiments of the invention.

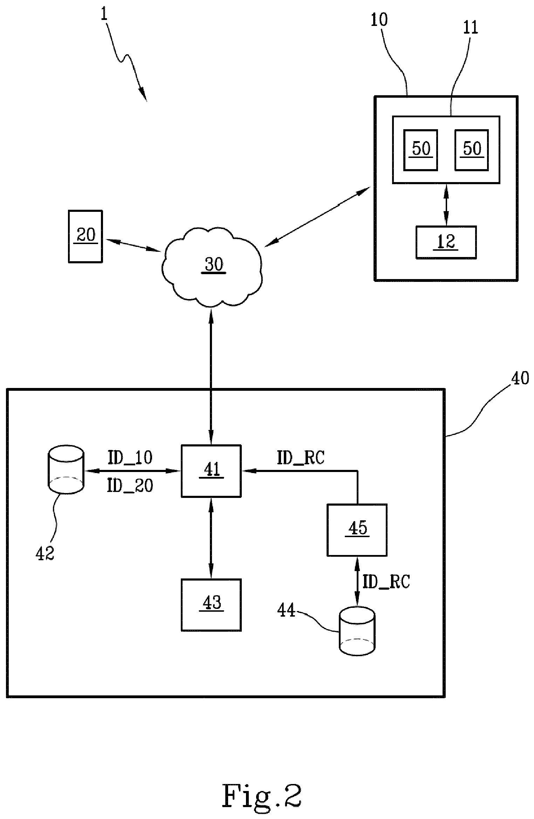

With reference to the cited figures, the facilitated video communication system, specific for people with cognitive or motor disabilities, according to the invention is indicated overall with the reference number 1 in the block diagram of figure 2.

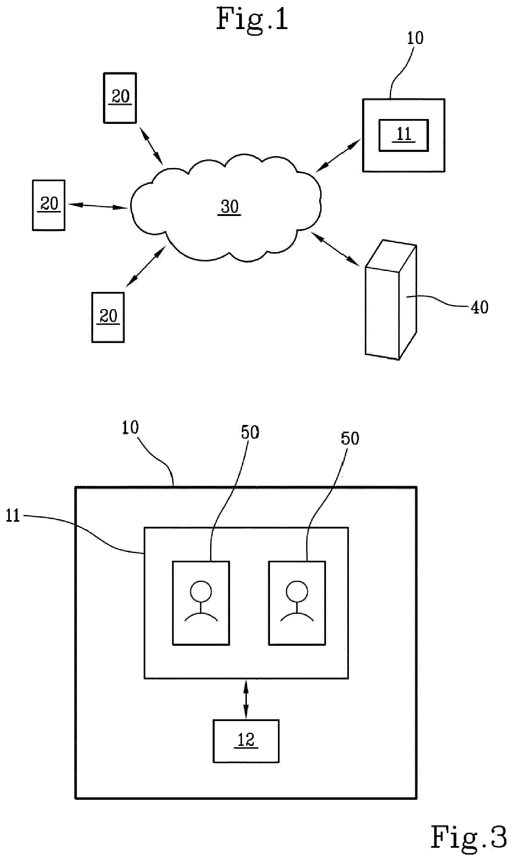

Figure 1 schematically illustrates a main electronic device 10, used by the person with cognitive or motor disabilities, a second electronic device equipped with the appropriate communication application 20, usable for example by relatives or friends, and a remote device 40, connected together via a telecommunications network 30.

The telecommunications network 30 is preferably the internet network, but could also be an intranet network or any private network adapted to implement a peer-to-peer type communication protocol. The telecommunications network 30 is connected, where necessary, to mobile networks for communication between the person with cognitive or motor disabilities of the portable electronic device 10 and one or more registered users equipped with a second electronic device 20.

The main electronic device 10 may operate via a telephone operator SIM card and/or Wi-Fi.

The electronic devices 10 and 20 comprise a display 11 adapted to display alphanumerical characters, images and films and at least one electronic image-taking device adapted to acquire images and/or films. The electronic devices 10 and 20 also comprise audio devices (at least one speaker and one microphone).

Preferably, the camera is a webcam and the speakers face the front of the device in such a way as to facilitate understanding and communication by the person with cognitive or motor disabilities.

The main device 10 may also comprise an external audio device connected thereto, equipped with an amplified audio system capable of greatly amplifying the power and quality of sound from the main device 10 itself. This option is particularly useful for hearing-impaired users.

The main device 10 may also comprise an external audio device connected thereto, equipped with 3 long-distance microphones to enable the user voice of the main device 10 to be clearly and accurately heard even with a low or uncertain voice volume.

The main device 10 may also comprise an external audio device connected thereto, equipped with a smart voice assistant to enable the user to activate video calls or functions of the device 10 with only the use of their voice. Preferably, the main electronic device 10 is of the touchscreen type. Alternatively, the main electronic device is a smart TV, equipped with a camera.

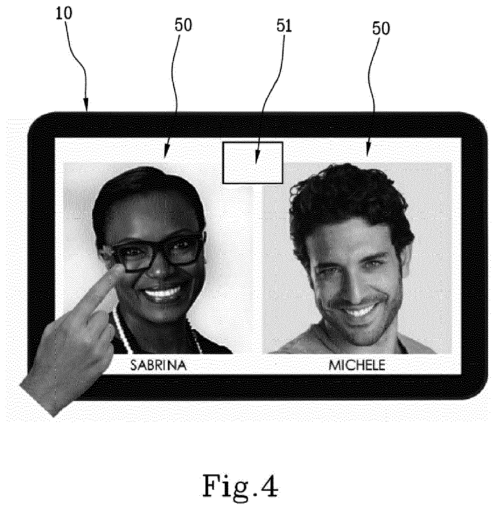

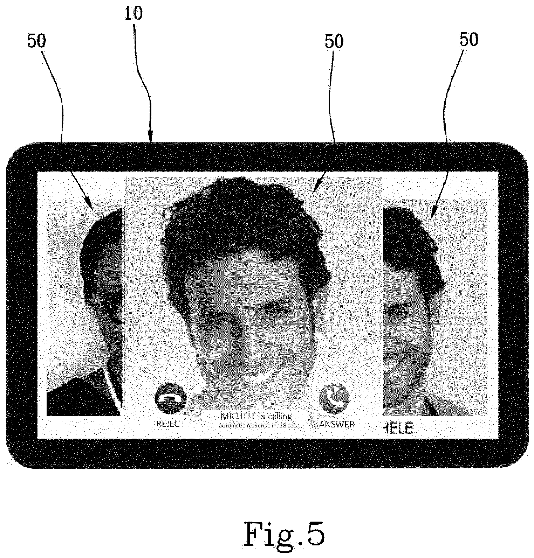

The main electronic device comprises a display 11 and a management module 12 which among the many functions it performs is also configured for a display limited to one or more photographs 50 of registered users or videolet modules, as illustrated in figures 4 and 5.

Management module 12 is intended as a module which from the moment the main electronic device 10 is switched on prevents the user with cognitive or motor disabilities from accessing the applications and functions of the native operating system of the device 10, thereby preventing such users from finding it difficult to make a video call. In this way, it is impossible for the user with cognitive or motor disabilities, once the main electronic device 10 is switched on, to intentionally or accidentally access functions and icons which the user cannot see or whose operation the user does not understand.

Furthermore, the electronic device 10 may only connect with registered users belonging to a certain closed video communication network.

In this way, users not registered on the video communication system 1 and/or not belonging to the same closed network of which the person with cognitive or motor disabilities is part, cannot video call that person, thereby avoiding any type of contact by unknown persons.

Figure 2 illustrates the block diagram of the video communication system 1, comprising a main electronic device 10 configured to provide wireless facilitated video communication services for people with cognitive or motor disabilities, a second electronic device 20 configured to make and receive wireless video calls with the main electronic device 10 by a registered user and belonging to a closed network of users, a telecommunications network for exchanging data 30 configured to enable a wireless video call to be made between two or more registered users, and a remote device 40.

In particular, the remote device 40 comprises a first memory unit 42, a second memory unit 44, an audio and video streaming module 41 and a display module 43.

The first memory unit 42 contains an identification code ID_10 of the main electronic device 10 associated with a photograph and a name of a user registered on the system 1 and an identification code ID_20 of the second electronic device 20, a photograph, and a name of a user registered on the system 1.

The second memory unit 44 contains a list of identification codes of closed networks ID_RC of users registered on the facilitated video communication system 1, in which each closed network identification code ID_RC comprises a logical connection to the identification codes ID_10 of the main electronic devices 10 and to the identification codes ID_20 of the second electronic devices 20 of users registered on the system 1 and associated with a certain closed network of users ID_RC.

In this way only users registered in the system 1 and belonging to a given closed network ID_RC can communicate with disabled persons of the main electronic device 10 registered on the system 1 and belonging to the same closed network ID_RC.

When registering a user on the system, an authentication procedure using user_id and password is requested. Once a user is registered on the system, in order to join a particular closed network ID_RC the user must request it from the closed network administrator.

Preferably, the identification code ID_20 of the second electronic device 10 and/or the user_id coincides with the user's personal email address.

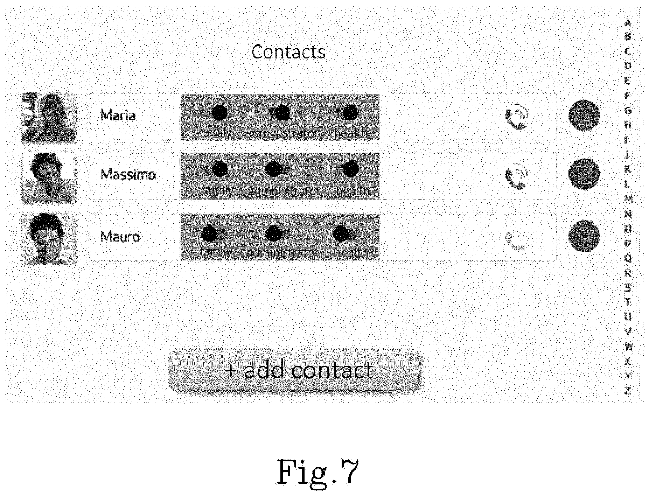

For each user of the second electronic device 20 registered on the system 1, it is possible to define one or more parameters or profiles Pi among at least: family, administrator and/or health. The setting of the parameter or profile Pi is possible when the closed network is created, by going to a contacts screen, as illustrated by way of non-limiting example in figure 7. The on/off value of each parameter Pi allows the sending or not sending of any notifications from the main device 10. For example, if the parameter Pi for health is set to "ON" on a given contact, the contact may receive various types of notifications.

In particular, for each contact in the address book of a given main electronic device 10, there are several settings of the parameter Pi that determine its operation:
∘ "Family": if active, the contact will receive notifications regarding the family members of the user of the main electronic device.
∘ "Battery": if active, when the battery level of the main electronic device 10 drops below a predetermined threshold value (e.g., a threshold of 30%), all the contacts in the family group are notified so that they can intervene either by alerting the user of the main electronic device 10 or by personally intervening to charge the device 10.

"Administrator": if active, the contact will receive notifications regarding the administrators of the user of the main electronic device 10. Some non-limiting examples comprise the following notifications:
∘ "Less than 30 minutes of conversation left". The notification allows users configured as administrators to purchase a minute package for the desired user NONNY.
∘ "Health": If active, the contact will receive notifications regarding certain health parameters provided by wearable devices from the user of the main electronic device 10 and connected to the same via Bluetooth. Examples of health-related notifications include:
   - User temperature;
   - User presence in the vicinity of the main electronic device 10 (for example, to check if the user leaves the house);
   - User waking or sleeping state;
   - Strong stresses of the device that could indicate a fall of the user.
∘ "Automatic response": if activated, when the main electronic device 10 receives a call from a relative contact, it will automatically activate after twenty seconds. For privacy reasons, this mode must be explicitly agreed with the user of the main electronic device 10 and serves in all those situations when the user of the device 10 does not have or has limited walking capabilities and may not be able to confirm the response to an incoming call.
∘ "Delete contact". By pressing the red button with the waste bin icon, and after confirming, the contact is deleted from the address book.

Alternatively, the registered user can be invited to join a specific closed network ID_RC by the administrator thereof.

Users of the electronic devices 20 that are configured as "Administrators" for a main electronic device 10 have the right to remotely access and modify the configuration settings of that device 10.

The audio and video streaming module 41 of the remote device 40 is configured to make a video call between the main electronic device 10 of a user registered on the system 1 and belonging to a certain closed network ID_RC and the second electronic device 20 of another registered user belonging to the same closed network.

When the person with disabilities swipes the photograph 50 of the registered user to video call, displayed on the display 11 of the main electronic device 10, the video call is made between the two registered users.

The display module 43 of the remote device 40 is configured to display on the display 11 of the main electronic device 10 and/or on the display of the second electronic device 20 one or more images 50 of registered users. Such images of registered users are stored in the first memory unit 42. The management module 12 is configured to display on the display 11 of the main electronic device 10 of a user registered on the video communication system 1 and belonging to a given closed network ID_RC, one or more photographs 50 of contacts of registered users. In particular, the management module 12 allows two main ways of displaying contacts: the first which gives priority to the maximum size of the photo of the profiles displayed, and the second which gives priority to the display of the maximum number of contacts on each screen.

Depending on the display mode selected, the registered user will have the following display possibilities:
∘ a photograph 50 displayed at the centre of the display 11 of a registered user belonging to the same closed network ID_RC;
∘ two side-by-side photographs 50 of registered users belonging to the same closed network ID_RC with the possibility to scroll the photographs by clicking on an icon 51 should the number of contacts exceed two units;
∘ a maximum grid of six photographs 50 per single screen of registered users belonging to the same closed network ID_RC, with the possibility to scroll through the grids of photographs by clicking on an icon 51 should the number of contacts exceed six units.

Preferably, a photograph 50 is displayed in the foreground only at the moment of an incoming or outgoing call from the main device 10. In this way, it is possible to see the face of the caller or the person being called in the foreground, making it easily identifiable by the elderly user or user with cognitive or motor disabilities.

When the communication begins, the screen is replaced by the camera in real time, if the caller or the contact being called is connected to the video call service, or by the video guided service if the contact being called or the caller is connected to such service. The display background of the display 11 of the main electronic device can be set to light or dark according to the user's preference.

The photograph 50 may represent a natural person associated with either a video call service or a VIDEOLET functional module.

VIDEOLETs are modules which, always represented by an intuitive and representative photo of the service offered, perform specific functions for elderly or disabled people, with the aid of a video (animated or filmed), which can have multiple purposes, including:
- explain or describe how to perform a task or exercise;
- provide exercises oriented to cognitive training to stimulate the functioning thereof;
- training.

Examples of VIDEOLET functions include:
- Video-guided functions for performing medical measurements (e.g., pressure, oxygen, temperature, weight, etc.) while videos are shown which explain to the patient, user of the main device 10, how to perform them correctly.
- Video-guided functions for taking drugs.
- Video-guided functions for explaining a cooking recipe.
- Video-guided functions for showing and explaining the correct performance of specific and personalised physical exercises that must be performed by the users of the main device 10.

The behaviour of the videolet modules is completely similar to the behaviour of the contacts connected to the main device 10 and displayed through a photo 50:
- When touched by the user, they react by activating the corresponding video guide as if a video call was being made.
- The video guides can also call the main device 10 as if they were normal incoming calls. The call function of the videolet is associated with a calendar, configurable by the user or caregiver, which allows the programming of calls by each videolet and the subsequent execution of the video-guided function associated therewith.

This mode of operation, which exploits the familiar call mechanism, is particularly innovative and effective in reminding, explaining and making the elderly or disabled user of the main device 10 perform video-guided activities aimed at their well-being, at predetermined days and times. Preferably, the management module 12 is configured to display on the screen 11, in addition to one or more photographs 50 of users belonging to a certain closed network ID_RC of users registered on the system 1, an icon 51 that recalls some basic functions of the main electronic device 10 of the user with disabilities.

In addition, the management module 12 displays, from the moment the electronic device 10 is switched on, continuously and without interruption, one or more photographs of registered users belonging to a given closed network, preventing the native operating system from putting the main device 10 into standby or energy-saving mode (darkening the screen).

In this way, the main electronic device 10 continuously displays the photographs, exactly as if it were a traditional picture frame.

By way of example, but not limited to the present invention, an initial configuration module and/or user profile and/or other menus of the main electronic device 10 may be accessed upon pressing an icon 51 for a certain predetermined time interval.

During the initial configuration step of the device 10, it is possible to select the language used by the device, set the type of connectivity (for example, "mobile network" or Wi-Fi or both options), the photograph 50 and/or the user name of the user's contacts that will be displayed on the devices so as to be able to identify them among any other contacts.

The photograph 50 is not mandatory and can be subsequently inserted or modified. If a profile photograph 50 is not used, an icon will be used to represent the user registered on the system 1.

After completing the configuration procedure of the device 10 with all the necessary information, a screen is displayed which provides the necessary instructions to connect to other registered users.

The facilitated video communication system 1 advantageously comprises a module 45 for the creation and updating of a closed network configured to create an identification code of a closed network ID_RC comprising a sub-set of registered users, containing a logical connection to one or more main electronic devices 10 of registered users of said sub-set with one or more second electronic devices 20 of registered users of the same sub-set. The module 45 for the creation and updating of a closed network is also configured to update said second memory unit 44.

Only the sub-set of users registered on the system 1 and belonging to the same closed network can video communicate with each other. Advantageously, the main electronic device 10 comprises a frame or support 13 configured to support the main electronic device 10 in a substantially vertical position.

The frame 13 preferably comprises a first means configured to charge the main electronic device 10 and a second means that can be connected to a domestic electric power supply network for charging the battery of the main electronic device 10.

The main electronic device 10 also comprises a power and charging system specially designed to facilitate the connection and disconnection thereof with the main device 10 and simultaneously prevent damage to the device if it is moved while the latter is connected. In particular, the power supply system consists of three main elements:
a) A magnetic adapter A that can be inserted in the USB connector of the main device 10 and remains fixed.
b) A cable B that can be magnetically connected and disconnected to the adapter A described in the previous point. To connect the cable B to the adapter A, it is simply required to bring the magnetic end of the cable B closer to such adapter. To disconnect the cable, it is simply required to pull the cable B slightly to detach the magnetic end thereof from the adapter A.
c) A power supply C which, inserted into the wall socket, connects to the cable B.

Preferably, the frame 13 is made of acrylic glass, but also of rubber derivatives (e.g., neoprene) and/or aluminium most suitable for use by multiple users in social-sanitary environments.

Advantageously, the main electronic device 10 is a portable electronic device or a smart TV based on a native operating system. The software component of the device will be digitally signed in order to gain privileges on the underlying native operating system and thus obtain full control thereof. In this way, the native functions and the operation of the underlying operating system are completely masked to the end user who can only interact with the simplified and specific functions offered by the main electronic device 10.

The management module 12 and/or the display module 43 of said remote device 40 are configured to display a fixed image of one or more photographs 50 of registered users in a continuous mode in relation to an active status of the main electronic device 10, i.e., when the device is powered on and powered up.

Advantageously, the management module 12 of the main electronic device 10 and the display module 43 of the remote device 40 are configured to prevent access to the functions of the native operating system (e.g., Android) of the main electronic device 10 and to continuously display photographs 50 of the registered users.

Preferably, the mobile electronic device is one among a smartphone, a tablet or a portable computer.

The native operating system of the primary electronic device 10 and/or the second electronic device 20 is Android or iOS.

Advantageously, the remote device 40 is configured to operate on the main electronic device 10 one or more of at least the following operations:
- a remote reset;
- an update of the facilitated video communication system 1;
- a recovery of the native operating system functions;
- a meter of calls made in minutes.

Preferably, the video communication between the main electronic device 10 and the second electronic device 20 of a closed network ID_RC of the system 1 takes place in an encrypted way.

In general, it should be noted that in the present context and in the subsequent claims, the remote device 40 is considered to be split into distinct functional modules (storage modules or operating modules) for the sole purpose of describing its functions clearly and completely.

Such remote device can comprise a single electronic device, appropriately programmed to perform the functions described, and the different modules can correspond to hardware entities and/or routine software which are part of the programmed device.

Alternatively or additionally, these functions can be performed by a plurality of electronic devices on which the aforesaid functional modules can be distributed.

The remote device 40 can also make use of one or more processors for executing the instructions contained in the memory modules.

Preferably, the remote electronic device 40 comprises a service module configured to generate, display and provide an information and operational dashboard of the entire installed base. Some of the functions offered include:
- Display all registered devices.
- Display the installed software version
- Display all video calls made for each device, the start time and the end time.
- The approximate (town) geolocation of the device.
- Possibility to force a software update on a single device or on a selection of devices.
- Possibility to reset the device.

The remote device 40 optionally also comprises an automatic notification module which allows the contacts of the main electronic device 10 to be informed of and therefore intervene on a series of possible problems of the user of the main electronic device 10.

Some of the main types of notifications envisaged by the system 1:
- notification that the battery of the main electronic device 10 is almost depleted. This notification solves the frequent problem where the elderly can detach, also inadvertently, the plug of the main electronic device 10 from the wall socket and forget to reattach it, thus consuming the entire battery charge of the device. In this way, before the main electronic device 10 fully discharges, the contacts of the main electronic device 10 can intervene either in person or remotely by informing and instructing the owner of the main electronic device 10 to reattach the plug to the wall socket;
- notification of few conversation minutes remaining. To provide a high-quality service, the main electronic device 10 uses a third-party back-end service to manage the video communication between the main electronic device 10 and the other devices. This service has a cost per minute, albeit very low. Therefore, the service must be "reloaded" through the purchase of packets of conversation minutes which are purchased by clients through the "in-app purchase" mode or other equivalent modes;
- notifications of calls from the main electronic device 10 when in automatic response mode. In this way, the user will still have evidence of the call attempts made by his/her loved ones;
- possibility to connect biometric devices to the main electronic device 10 to allow people connected via client application to be informed of the main health parameters, the status of the user and the possible presence of the same inside the house. All this information is associated with alarms that notify people connected to a main electronic device 10 and the relative user of warning situations.

During normal operation, the main electronic device 10 is presented as a digital photo frame and shows photographs, with the relative names, of the contacts of registered and configured users who can receive or make calls or video calls to and from the main electronic device 10.

The photos shown by the main electronic device 10 may also represent and be associated with native or third-party applications, called videolets, adapted to perform specific tasks for the user of the main device 10 aided by videos (animations or films) that explain and show the user how to perform the specific task.

The user of a main device 10 will only have to touch the photo of the person they want to contact to activate a video call.

Alternatively, the user, by touching a photo connected to a videolet and not to a contact would cause the corresponding video-guided application to be run. Once it has been completely run, the management module 12 would resume control by again displaying the photos 50 of the profiles connected to the main device 10.

The main electronic device 10 may call or be called either by registered user contacts equipped with the main device 10 or by registered user contacts who have downloaded the CLIENT application to their Apple or Android smartphone.

In a second aspect of the invention, a facilitated video communication method is envisaged, specific for people with cognitive or motor disabilities, comprising the steps of:
a) arranging a main electronic device 10 configured to provide wireless facilitated video communication services for people with cognitive or motor disabilities, comprising a display 11;
b) displaying on the display 11 of said main electronic device 10 one or more photographs 50 of registered users;
c) arranging a second electronic device 20;
d) making and receiving wireless video calls between users registered to the facilitated system 1 by means of said main electronic device 10 and said second electronic device 20;
e) making a wireless video call between two or more users registered on the facilitated system 1 by means of a telecommunications network 30;
f) arranging a first memory unit 42 containing:
   - an identification code of the main electronic device ID_10 associated with a photograph and a name of a user registered on the system 1;
   - an identification code of the second electronic device ID_20 associated with a photograph and a name of a user registered on the system 1;
g) arranging a second memory unit 44 containing a list of identification codes of closed networks ID_RC of users registered on the system 1, in which each closed network identification code ID_RC comprises a logical connection to the identification codes of the main electronic devices ID_10 and to the second electronic devices ID_20 of registered users associated with the closed network ID_RC;
h) making a video call between the main electronic device 10 and the second electronic device 20 when the disabled person swipes the photograph 50 of the registered user to video call displayed on the display 11 of the main electronic device 10;
i) displaying on the display 11 of the main electronic device 10 and/or on the display of the second electronic device 20 one or more images 50 of registered users.

Once the configuration of the device 10 or 20 is complete, it is possible to connect to both other registered users who own a main electronic device 10 and other users who are equipped with a smartphone device 20.

The User ID and Password of the device 20 to which to connect are necessary in order to connect to another main device 20. The User ID and Password codes, which uniquely identify each electronic device present in the system, can be found in an "*INFORMATION*" window accessible by simply touching the icon 51 present, for example, at the top centre of the main screen 11 of the device 10.

After entering the codes in the appropriate fields and pressing a Confirm button, the photograph 50 of the profile of the main device 10 just added to the address book will appear in the main screen. Conversely, the first user's profile photo will appear on the newly configured contact's electronic device. To instead add a contact equipped with a mobile device 10, it is necessary to have their email address.

After entering the email address and pressing the confirm button, the device will send an invitation email to the contact containing the links to download the CLIENT application. Once the application has been installed and the user has registered with their email address, the contact will only need to confirm the invitation to become an active contact.

After the first contact is displayed on the main screen of the device, to add more contacts, it is necessary to access the *"SETTINGS"* menu.

The information window can be accessed at any time from the main screen of the main device 10, which provides at least the following data:
- user ID and password. To allow others to connect;
- available conversation minutes on the device;
- battery charge;
- software version installed.

All the aspects and functions offered can be configured from the user settings menu.

To access the user menu, the icon 51 at the top centre of the main screen must be pressed and held, for example for more than 5 seconds. This delay is used to avoid unintended access to the configuration area. The menu has the sections: Profile, Connection, Call, Contacts, Language, Screen.

In the "profile" section, the name and photo of a user's profile can be changed. It is also envisaged to allow connected family members to publish a suitable photo of the owner of the main electronic device 10.

In the "connection" section it is possible to enable or disable both the mobile data network and the Wi-Fi network. For the Wi-Fi network, a default network can be selected and its relative password set, if required. The call preferences can be set in the "call" section.

If the "Request confirmation before making the call" option is activated, when the registered user touches a photo to call the relative contact, the system will display a confirmation window before making the call. If the option is instead deactivated (default), the system will make the call as soon as the user touches the photo 50 of the desired contact. Contacts can be managed and the function features thereof can be configured in the "contacts" section.

For each contact in the address book, there are several settings that determine their function:
∘ "family" setting. If enabled, the contact will receive notifications regarding the family members of the user of the main electronic device 10. At the moment of writing this document, the notifications are:
   ∘ "battery": critical, when the battery level of the main electronic device 10 drops below the threshold of 30%, all the contacts in the family group are notified so that they can intervene either by alerting the user of the main electronic device 10 or by personally intervening to charge the main electronic device 10.
∘ "Administrator" setting. If enabled, the contact will receive notifications regarding the administrators of the user's main electronic device 10. At the moment of writing this document, the notifications are:
   ∘ "less than 30 minutes of conversation left", the notification allows users configured as administrators to purchase a minute package for the desired user main electronic device 10.
∘ "Automatic response" setting. If activated, when the main electronic device 10 receives a call from a relative contact, it will automatically activate after twenty seconds. For obvious privacy reasons, this mode must be explicitly agreed with the user of the main electronic device 10 and serves in all those situations when the user of the main electronic device 10 does not have or has limited walking capabilities and may not be able to confirm the response to a call.
∘ delete contact. By pressing the red button with the waste bin icon, and after confirming, the contact is deleted from the address book.

A "health" switch is also provided, which if activated, allows receiving notifications and alerts regarding the physical condition of the user of the main electronic device 10 provided by wearable devices and sensors connected to the main electronic device 10.

A third aspect of the present invention provides a computer program which, when running on a computer, implements at least one or more steps of the method according to the first aspect of the invention.

The foregoing in relation to a closed network, comprising a main electronic device and a second client electronic device is understood as extended to a system with a plurality of closed facilitated video communication networks, each of which comprises a plurality of main electronic devices and/or a plurality of second client electronic devices.

In general, the invention offers the following advantages:
- it provides a concrete and functional response that offers a communication and inclusion experience to people with cognitive or motor disabilities;
- dedicated and exclusive system to perform video communication functions;
- dedicated and exclusive system to carry out specific functional modules called VIDEOLETs, which, taking advantage of the immediacy of use of the user interface and being video-guided, are particularly suitable for use by elderly users or users with cognitive or motor disabilities;
- user interface and operation modelled on the specific needs of users unable to use other technological or IT tools such as computers, generic tablets or smartphones;
- complete, secure and closed system, which comprises mobile applications which allow the contacts of the person with cognitive or motor disabilities to have an equally simple and immediate experience with the communication system;
- unique and dedicated application;
- elimination of stand-by to avoid confusing the user with a screen turned off;
- a power and charging system specially designed to facilitate the connection and disconnection thereof with the main device 10 and simultaneously prevent damage to the device if it is moved while the latter is connected;
- an audio system which can be connected to the main device 10 which can amplify the audio signal by increasing its quality, both in input and output, and which allows voice recognition to allow the execution of voice assistants;
- possibility to adapt the display of contact photos in the manner most suited to the user's abilities and preferences;
- possibility to configure different profiles for the disabled person's contacts depending on the level of notifications and operations they can perform (Friend, Family, Guardian);
- possibility to configure the main electronic device to automatically and selectively answer calls from specific contacts for those users who are unable to answer independently.
- possibility for users of the client (second electronic device 20) to store one or more video messages that can be automatically played in the event of a call from the main electronic device 10 at a time when it is not possible to respond. For example, if the user of the second device 20 is at work or travelling, and the user of the main device 10 were to call them, instead of a simple non-response signal, the user would see the video-message previously recorded by the person called;
- predisposition to be able to connect several main electronic devices present in the same house, to provide the service in different rooms;
- predisposition to be able to make video calls between multiple users.

It is clear that the specific characteristics are described in relation to different embodiments of the invention with an exemplary and non-limiting intent. Obviously a person skilled in the art can make further modifications and variants to the present invention, in order to satisfy contingent and specific needs. For example, the technical characteristics described in relation to an embodiment of the invention can be extrapolated therefrom and applied to other embodiments of the invention. Such modifications and variations are moreover contained within the scope of the invention as defined by the following claims.

## Claims

1. A facilitated video communication system (1), specific for people with cognitive or motor disabilities, comprising:
• a main electronic device (10) configured to provide wireless facilitated video communication services for people with cognitive or motor disabilities, comprising:
∘ a display (11);
∘ a management module (12) configured for viewing limited to one or more photographs (50) of registered users;
• a second electronic device (20) configured to make and receive wireless video calls with the main electronic device (10) by a registered user;
• a telecommunications network (30) configured to allow a wireless video call to be made between two or more registered users;
• a remote device (40) comprising:
∘ a first memory unit (42) containing:
▪ an identification code of the main electronic device (ID_10) associated with a photograph and with a name of a user registered on the system (1);
▪ an identification code of the second electronic device (ID_20) associated with a photograph and with a name of a user registered on the system (1);
∘ a second memory unit (44) containing a list of identification codes of closed networks (ID_RC) of users registered on the system (1), in which each closed network identification code (ID_RC) comprises a logical connection to the identification codes of the main electronic devices (ID_10) and of the second electronic devices (ID_20) of registered users associated with the closed network (ID_RC);
∘ an audio and video streaming module (41) configured to make a video call between the main electronic device (10) and the second electronic device (20) when the disabled person swipes the photograph (50) of the registered user to video call displayed on the display (11) of the main electronic device (10);
∘ a display module (43) configured to display on the display (11) of the main electronic device (10) and/or on the display of the second electronic device (20) one or more images (50) of registered users.

2. The facilitated video communication system (1) according to claim 1, wherein the management module (12) can display on the display (11) of the main electronic device (11) one or more from at least:
∘ a photograph (50) of a registered user displayed at the centre of the display (11);
∘ two side-by-side photographs (50) of registered users;
∘ a maximum grid of six photographs (50) per single screen of users registered and belonging to the same closed network (ID_RC), with the possibility to scroll through the grids of photographs by clicking on an icon (51) should the number of contacts exceed six units.

3. The facilitated video communication system (1) according to one or more of the preceding claims, wherein the management module (12) is configured to display in a facilitated manner one or more videolet modules configured to perform specific functions for elderly or disabled people, by means of a video aid which can have one or more of the following purposes:
• explain or describe how to perform a task or exercise;
• provide exercises oriented to cognitive training to stimulate the functioning thereof;
• training.

4. The facilitated video communication system (1) according to one or more of the preceding claims, comprising a power supply and charging system configured to facilitate the connection and disconnection with the main device (10) and simultaneously prevent damage to the device (1) if it is moved while the latter is connected, said power supply and charging system consisting of:
- a magnetic adapter that can be inserted in a USB connector of the main device (10);
- a power cable that can be magnetically connected and disconnected to the magnetic adapter;
- an electric power supply that can be inserted into the wall socket and connected to the power cable.

5. The facilitated video communication system (1) according to one or more of the preceding claims, comprising an external audio device connected thereto, equipped with:
- an amplified audio system capable of amplifying the power and sound quality coming from the main device (10);
- a plurality of long-distance microphones configured to allow hearing the voice of the user of the main device (10) clearly and precisely even with a low or uncertain vocal volume;
- a smart voice assistant to allow the user to activate video calls or functions of the main device (10) with only the use of their voice.

6. The facilitated video communication system (1) according to one or more of the preceding claims, comprising a module (45) for the creation of a closed network configured to:
∘ create an identification code of a closed network (ID_RC) comprising a sub-set of registered users, containing a logical connection to one or more main electronic devices (10) of registered users of said sub-set with one or more second electronic devices (20) of registered users of said sub-set;
∘ update said second memory unit (44).

7. The facilitated video communication system (1) according to one or more of the preceding claims, wherein the management module (12) displays on the main device an icon (51) configured for accessing the user profile if pressed for a certain predefined time interval.

8. The facilitated video communication system (1) according to one or more of the preceding claims, wherein said frame (13) comprises a first means configured to charge the main electronic device (10) and a second means that can be connected to a domestic electric power supply network for charging the battery of the main electronic device (10).

9. The facilitated video communication system (1) according to one or more of the preceding claims, wherein the frame (13) is made of acrylic glass, rubber derivatives and/or aluminium.

10. The facilitated video communication system (1) according to one or more of the preceding claims, wherein the main electronic device (10) is a portable electronic device or a smart-TV based on a native operating system.

11. The facilitated video communication system (1) according to claim 10, wherein the display module (43) of said remote device (40) is configured to display a fixed image of one or more photographs (50) of registered users in a continuous mode in relation to an active status of the main electronic device (10).

12. The facilitated video communication system (1) according to one or more of the preceding claims, wherein the management module (12) of the main electronic device (10) and the display module (43) of the remote device (40) are configured to prevent access to the functions of the native operating system of the main electronic device (10) so as to exclusively display the photographs (50) and videolet modules of registered users.

13. The facilitated video communication system (1) according to claim 10, wherein the mobile electronic device (20) is one from at least:
a smartphone;
a tablet;
a portable computer.

14. The facilitated video communication system (1) according to one or more of the preceding claims, wherein the communications network (30) is a mobile network and/or a Wi-Fi network.

15. The system according to one or more of the preceding claims, wherein the remote device (40) is configured to operate on the main electronic device (10):
a remote reset;
an update of the facilitated video communication system (1);
a recovery of the native operating system functions;
a meter of calls made in minutes.

16. The system according to one or more of the preceding claims, wherein the video communication between the main electronic device (10) and the second electronic device (20) of a closed network (ID_RC) of the system (1) takes place in an encrypted way.

17. A facilitated video communication method (1), specific for people with cognitive or motor disabilities, comprising the steps of:
a) arranging a main electronic device (10) configured to provide wireless facilitated video communication services for people with cognitive or motor disabilities, comprising a display (11);
b) displaying on the display (11) of said main electronic device (10) one or more photographs (50) of registered users;
c) arranging a second electronic device (20);
d) making and receiving wireless video calls between users registered on the facilitated system (1) by means of said main electronic device (10) and said second electronic device (20);
e) making a wireless video call between two or more users registered on the facilitated system (1) by means of a telecommunications network (30);
f) arranging a first memory unit (42) containing:
an identification code of the main electronic device (ID_10) associated with a telephone number, a photograph and with a name and surname of a user registered on the system (1);
an identification code of the second electronic device (ID_20) associated with a telephone number, a photograph and with a name and surname of a user registered on the system (1);
g) arranging a second memory unit (44) containing a list of identification codes of closed networks (ID_RC) of users registered on the system (1), in which each closed network identification code (ID_RC) comprises a logical connection to the identification codes of the main electronic devices (ID_10) and of the second electronic devices (ID_20) of registered users associated with the closed network (ID_RC);
h) making a video call between the main electronic device (10) and the second electronic device (20) when the disabled person swipes the photograph (50) of the registered user to video call displayed on the display (11) of the main electronic device (10);
i) displaying on the display (11) of the main electronic device (10) and/or on the display of the second electronic device (20) one or more images (50) of registered users.
